(19) Europäisches Patentamt / European Patent Office / Office européen des brevets

(11) EP 2 785 516 B1

(12) FASCICULE DE BREVET EUROPEEN

(45) Date de publication et mention de la délivrance du brevet:
05.10.2016 Bulletin 2016/40

(51) Int Cl.:
B29D 30/06 (2006.01)    B29C 33/20 (2006.01)

(21) Numéro de dépôt: 12791776.3

(22) Date de dépôt: 28.11.2012

(86) Numéro de dépôt international:
PCT/EP2012/073854

(87) Numéro de publication internationale:
WO 2013/079541 (06.06.2013 Gazette 2013/23)

(54) **MOULE AUTOBLOCANT POUR LE MOULAGE ET LA VULCANISATION DE PNEUMATIQUES A EFFET DE LEVIER**

SELBSTVERRIEGELNDE FORM ZUM FORMEN UND VULKANISIEREN VON REIFEN MIT EINEM HEBELVERHÄLTNIS

SELF-LOCKING MOLD FOR MOLDING AND VULCANIZING TIRES USING LEVERAGE

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: 30.11.2011 FR 1160962

(43) Date de publication de la demande:
08.10.2014 Bulletin 2014/41

(73) Titulaires:
• Compagnie Générale des Etablissements Michelin
63000 Clermont-Ferrand (FR)
• MICHELIN Recherche et Technique S.A.
1763 Granges-Paccot (CH)

(72) Inventeurs:
• FERRAND, Jean-Charles
F-63040 Clermont-Ferrand Cedex 9 (FR)
• APERCE, Jean-Claude
F-63040 Clermont-Ferrand Cedex 9 (FR)
• MONDOLO, Adrien
F-63040 Clermont-Ferrand Cedex 9 (FR)

(74) Mandataire: Noel, Luminita
Manufacture Française
Des Pneumatiques Michelin
DGD/PI F35/Ladoux
23, Place des Carmes-Déchaux
63040 Clermont-Ferrand Cedex 9 (FR)

(56) Documents cités:
EP-A1- 0 436 495    EP-A1- 1 918 087
FR-A5- 2 087 540    US-A- 5 304 270

## Description

L'invention concerne le domaine de la fabrication des pneumatiques et plus particulièrement la vulcanisation des pneumatiques de grande largeur à l'aide de moules dits autobloquants.

Les moules usuels sont constitués de plusieurs pièces séparées qui, par rapprochement relatif, délimitent un espace de moulage sensiblement toroïdal. Ils comportent essentiellement deux coquilles pour le moulage des flancs du pneumatique, et plusieurs secteurs périphériques, situés axialement entre les coquilles, pour le moulage de la bande de roulement. Le rapprochement de toutes ces pièces est assuré par un mécanisme externe au moule.

L'ébauche crue du pneumatique à vulcaniser est introduite dans le moule, et une membrane de cuisson vient plaquer fermement le pneumatique contre le moule de manière à imprimer la sculpture de la bande de roulement et obtenir un pneumatique vulcanisé de dimensions précises. La pression exercée par le pneumatique sur les pièces de moule est reprise par des mécanismes qui reportent les efforts sur le châssis de la presse de cuisson afin de maintenir le moule fermé pendant toute la durée de la cuisson.

Plus particulièrement, l'invention s'intéresse aux moules dits autobloquants qui ont la particularité de comporter des coquilles et des secteurs qui coopèrent pour résister à la pression de sorte que les pièces du moule restent en position de fermeture sans le concours de pièces externes additionnelles de calage ou de maintien.

La publication EP 0 436 495, ou encore la publication EP 1 918 087, décrivent un moule de ce type, dans lequel chaque secteur comporte à ses bords latéraux une saillie s'étendant radialement vers l'intérieur du moule et munie d'un rebord s'étendant axialement vers l'intérieur du moule. L'extrémité radialement extérieure de chaque coquille est terminée par un volume complémentaire comportant une saillie munie d'un rebord. Lesdits rebords coopèrent pour maintenir le moule fermé lorsque celui-ci est soumis à une pression interne tendant à écarter axialement les coquilles l'une de l'autre et à reculer radialement les secteurs.

Le moule comporte des surfaces d'appui tronconiques sur les rebords des dits secteurs et desdites coquilles. Lesdites surfaces tronconiques sont inclinées d'un angle $\alpha$ par rapport à l'axe du moule, de sorte que les prolongements de la trace de ces surfaces tronconiques sur un plan méridien passant par l'axe du moule se coupent du côté radialement intérieur du secteur considéré.

Pour que le moule reste toujours fermé, l'angle $\alpha$ est calculé de manière à ce que l'effet de la pression interne sur les coquilles qui tend à rapprocher les secteurs vers le centre du moule, soit prépondérant par rapport à l'effet de la pression interne sur les secteurs qui tend à écarter radialement les secteurs et, par transmission des efforts radiaux par l'intermédiaire des surface tronconiques, à rapprocher axialement les coquilles l'une vers l'autre.

En ce sens, plus la pression interne est élevée plus les forces de fermeture du moule sont importantes. Ce type de moule est donc plus communément désigné sous l'appellation de moule autobloquant.

L'angle $\alpha$ est sensiblement déterminé par le rapport de la surface des coquilles soumise à la pression interne et de la surface des secteurs soumis à ladite pression. On observera que ce rapport correspond au rapport du diamètre J du moule au niveau du point d'emboitage, et de la largeur L du moule entre le point d'emboitage supérieur et le point d'emboitage inférieur.

Les forces mises en jeu sont relativement importantes et le dimensionnement des pièces est adapté pour assurer le moins de jeux possible. Aussi, il peut en résulter un moule dont les pièces sont massives et, par voies de conséquence, plus coûteuses.

Ainsi, plus la bande de roulement sera large par rapport au flanc, plus l'angle $\alpha$ devra être réduit, avec pour conséquence une augmentation importante de la taille des saillies destinées à coopérer par l'intermédiaire des surfaces tronconiques. Concomitamment, plus cette largeur sera important plus les dos des secteurs auront tendance à se bomber radialement vers l'extérieur sous l'effet de la pression interne. Et plus il sera nécessaire d'augmenter l'épaisseur radiale des secteurs pour lutter contre ces efforts, afin d'éviter l'apparition de jeux circonférentiels entre les secteurs au niveau de la zone équatoriale.

Comme défini dans la revendication 1, l'invention a pour objet de proposer des règles de conception d'un moule de type autobloquant tel que décrit ci-dessus, permettant de réduire fortement la quantité de matière nécessaire pour maintenir ledit moule en position fermée sous l'effet de la pression, tout en luttant efficacement contre les jeux intersectoriels.

Pour ce faire, l'invention tire partie des forces en présence au niveau des points de contact entre les deux surfaces tronconiques.

Dans un plan méridien passant par l'axe du moule, si on considère la droite parallèle à l'axe du moule et passant par le point d'application de la résultante des forces de contact entre les coquilles et les secteurs, assimilé dans le cas du moule décrit ci-dessus au point de contact entre les deux surfaces tronconiques, et une droite également parallèle à l'axe du moule et située dans le prolongement de la partie interne du secteur, et par a, la distance (radiale) entre ces deux droites, on observe que la résultante des forces en ce point de contact appliquée avec un bras de levier égal à a, engendre au niveau du secteur un couple $C_F$ de direction opposé au couple $C_P$ engendré sur le secteur par les forces de pression qui s'exercent sur la paroi dudit secteur. On observe que ces couples sont de signes opposés. Le couple résultant $C_F + C_P = C$ est considéré comme positif lorsque ce couple a pour effet de provoquer un bombé des secteurs orienté radialement vers l'extérieur à l'origine du jeu circonférentiel.

On observe également que la valeur de ces forces et de ces couples dépendent seulement de la valeur de la pression et des caractéristiques géométriques du moule et donc du pneumatique destiné à être introduit dans ledit moule.

Il a été mis en évidence que, en ajustant judicieusement la valeur du bras de levier, et donc de a, en fonction du diamètre $D_S$ correspondant au diamètre du pneumatique et des valeurs L et J décrites ci-dessus, on peut rendre le couple résultant C égal à $C_F + C_P$ approximativement égal à zéro. Cet objectif est atteint lorsque :

$$a = 0,42 * D_s \left(\frac{L}{J}\right)^2$$

L'invention consiste donc à ajuster la longueur du bras de levier a en multipliant la valeur à l'équilibre et déterminée par le résultat énoncé ci-dessus, par un coefficient k, préférentiellement compris entre 0,8 et 1,4, selon l'effet prépondérant que l'on cherche à obtenir.

Des formes préférentielles de l'invention sont définies dans les revendications dépendantes.

En effet, en jouant sur la valeur de ce bras de levier on peut même rendre le couple résultant légèrement négatif de sorte que la déformation radiale des secteurs sous l'effet de la pression soit dirigée radialement vers l'intérieur du moule.

Ce dernier effet est obtenu pour des valeurs de k comprise préférentiellement entre 1 et 1,4, et s'avère particulièrement intéressant en ce qu'il autorise un frettage circonférentiel entre les secteurs, et permet d'obtenir un contact parfait entre les secteurs au centre de la bande de roulement sans qu'il soit nécessaire d'augmenter démesurément l'épaisseur radiale des secteurs résistants.

A l'inverse, pour réduire les masses des pièces formant les secteurs, on peut se contenter d'un bras de levier plus court que le bras de levier à l'équilibre, en ajustant ledit bras de levier pour avoir un jeu circonférentiel entre les secteurs juste inférieur aux tolérances admises.

Avantageusement, l'angle de la surface tronconique ($\alpha$) des saillies est compris entre 10°et 40° et préférentiellement entre 15° et 35°.

Pour réduire l'effet de coin engendré par les forces de fermeture au niveau des surfaces tronconiques le moule peut utilement comporter des moyens de limitation d'effort composés d'une butée et d'un logement disposés respectivement dans le prolongement radial de chacune des saillies et possédant chacun une portée, lesdites portées étant destinées à venir en contact l'une de l'autre lorsque la pression interne dans le moule dépasse un seuil donné.

Selon une première alternative, la butée et le logement sont disposés du coté radialement externe des saillies de la coquille et des secteurs de sorte que la portée axialement externe de la butée coopère avec la portée axialement externe du logement.

Selon une seconde alternative, la butée et le logement sont disposés du coté radialement interne des saillies de la coquille et des secteurs de sorte que la portée axialement interne de la butée coopère avec la portée axialement interne du logement.

Avantageusement, le jeu axial entre la portée de la butée et la portée du logement, lorsque les faces de chacune des saillies entrent en contact l'une de l'autre, est compris entre 0, 05mm et 1 mm.

On peut aussi calculer le jeu axial entre les portées de la butée et du logement lorsque les faces de chacune des saillies entrent en contact l'une de l'autre de sorte que les portées de la butée et du logement entrent en contact lorsque la pression dans le moule représente 50% à 80 % de la pression nominale.

La description qui suit s'appuie sur les figures 1 à 4 dans lesquelles :

- la figure 1 est une demi vue en coupe dans un plan méridien d'un moule selon l'invention,
- la figure 2, illustre l'effet des forces de pression sur le moule,
- la figure 3 illustre une alternative de réalisation du moule permettant de limiter les efforts au niveau des points de contact entre les surfaces tronconiques,
- la figure 4 illustre une variante de réalisation de l'alternative illustrée à la figure 3.

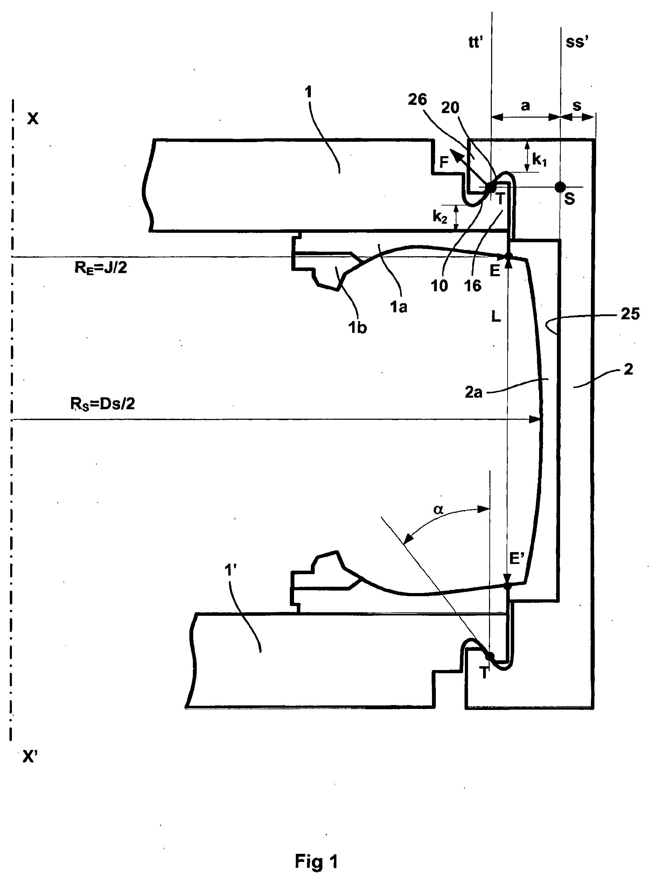

La figure 1, représente une demi vue en coupe dans un plan méridien d'un moule selon l'invention. Le moule comprend une coquille supérieure 1 et une coquille inférieure 1' de forme circulaires. Des secteurs résistants, 2 sont répartis circonférentiellement autour des coquilles 1 et1'.

Les coquilles et les secteurs sont associés à des moyens d'ouverture et de fermeture (non représentés) aptes à déplacer les coquilles dans la direction axiale et à déplacer les secteurs dans la direction radiale. Le moule de la figure 1 est donc représenté dans la position fermée correspondant à la position dans laquelle les forces de pression internes agissent sur les coquilles et les secteurs.

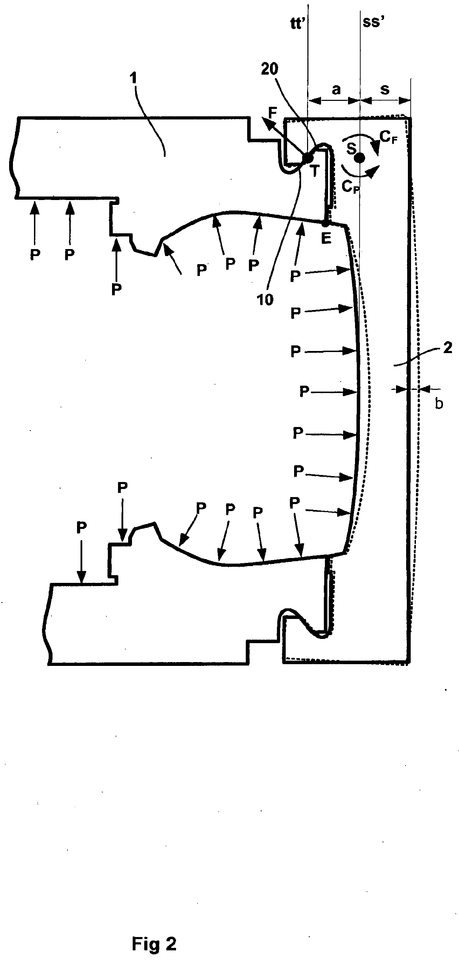

Comme cela est illustré à la figure 1, les coquilles peuvent être formées d'une partie résistante 1 supportant des pièces non résistantes, 1a et 1b dont la partie radialement interne est destinée à venir en contact avec le pneumatique pour mouler la zone flanc (1a) ou la partie basse (1b). On entend ici par non résistant des pièces ne participant pas ou faiblement à la résistance mécanique du moule sous l'effet des forces de pression. Il va donc de soi que les parties moulantes 1a et 1b peuvent être réalisées venant de matière avec la coquille 1 comme cela est illustré à la figure 2, ou séparément, comme cela est illustré à la figure 1 pour permettre une certaine adaptation dimensionnelle du moule.

De la même manière, les secteurs comportent une partie résistante 2, et des éléments de sculpture 2a destinés à mouler la bande de roulement du pneumatique. La pièce 2a peut également venir de matière avec la partie résistante 2, comme cela est illustré à la figure 2, et former avec cette dernière une seule pièce résistante.

Chaque secteur 2 comporte à son bord latéral supérieur et inférieur une saillie 16 s'étendant radialement vers l'intérieur et munie d'un rebord s'étendant également axialement vers l'intérieur du moule et présentant une surface tronconique 20. La surface tronconique 20 fait un angle α avec la direction axiale du moule. Les prolongements de la trace de chaque surface tronconique dans le plan méridien se coupent du coté radialement intérieur du moule. En position fermée, comme cela est illustré à la figure 1, les prolongations des surfaces tronconiques forment un cône dont le sommet est porté par l'axe XX'.

Chaque coquille comporte une saillie 16 s'étendant radialement vers l'extérieur et munie d'un rebord présentant une surface tronconique inclinée d'un même angle α par rapport à l'axe XX' du moule.

En position fermée, les surfaces tronconiques 20 et 10 sont placées en vis-à-vis et sont en contact l'une avec l'autre au niveau d'une ligne circulaire coupant le plan méridien au point T. Le point T est situé sensiblement au milieu de la hauteur des parties de surface tronconiques mutuellement en contact.

Dans un premier temps, comme cela a déjà été brièvement exposé, l'angle α est déterminé de sorte que les forces exercées par les coquilles au niveau des surfaces coniques, aient tendance à refermer le moule, en s'opposant aux forces exercées par les secteurs. En première approximation, on s'arrange pour que Tgα reste inférieur au rapport $\dfrac{J}{2L}$.

Les valeurs de l'angle α sont en règle générale comprises entre 10° et 40°, et préférentiellement entre 15° et 35°.

On observera ici qu'un angle trop fermé ne permet pas de compenser les jeux entre les secteurs et les coquilles et engendre des contraintes supérieures dans les charnières formées par les saillies. Aussi, en pratique on définira un angle α légèrement inférieur à la limite imposée ci-dessus.

Le point d'emboitage E est défini comme le point de contact, au niveau de la partie moulante, entre la coquille et le secteur, et limite la zone où s'exercent les forces de pression agissant sur la coquille de la zone où s'exercent les forces de pression agissant sur les secteurs.

La distance axiale entre les points d'emboitage supérieur et inférieur est notée L. Le rayon au point d'emboitage $R_E$ correspond à la moitié du diamètre J. Le rayon $R_S$ correspond à la moitié du diamètre $D_S$ du moule au niveau de l'équateur.

L'homme du métier en charge de la conception du moule va s'intéresser dans un deuxième temps au dimensionnement des pièces destinées à reprendre les efforts imposés par les forces de pression, et à calculer l'épaisseur radiale s des secteurs résistant

En référence à la figure 2, on observe que les forces de pression exercent une poussée dirigée radialement vers l'extérieur du moule. Sous l'effet de cette poussée, les secteurs se déforment avec un bombé b. Cette déformation a pour effet d'augmenter la circonférence du moule dans le plan équatorial et, par voie de conséquence, de provoquer l'apparition de jeux circonférentiels entre les secteurs. Connaissant la tolérance de jeu admise pour éviter l'apparition de bavures de gomme, il est alors aisé de déterminer l'épaisseur s du secteur résistant pour limiter la flèche b à une valeur admissible.

On observe toutefois, comme cela a été évoqué en introduction de la présente description, que ce calcul peut conduire à des épaisseurs s très importantes; et donc à des couts de réalisation des moules élevés. C'est à la réduction de ce problème que l'invention s'adresse.

Le point T est défini comme le point d'application de la résultante des forces F s'exerçant entre la coquille et les secteurs. Dans le plan méridien passant par l'axe XX' on trace la droite tt' passant par le point T et parallèle à l'axe XX'.

De même, toujours dans ledit plan méridien, on trace une droite ss' qui prolonge la trace 25 de l'intersection de la partie radialement interne du secteur résistant 2 avec ledit plan méridien.

Lorsque la partie moulant 2a est confondue avec le secteur résistant 2, la droite ss' est alors assimilée à la droite parallèle à l'axe XX' tangente au sommet du moule, et correspondant sensiblement à la droite passant au point d'intersection du moule avec un plan équatorial perpendiculaire à l'axe XX' comme cela est illustré à la figure 2. L'intersection de la droite ss' avec une droite perpendiculaire à l'axe XX' et passant par le point T se fait au point S. La distance a correspond à la distance entre les droites tt' et ss'.

Toujours en référence à la figure 2, on détermine alors au point S, le couple $C_F$ exercé par la résultante F des forcés de fermeture au point T avec le bras de levier a, et le couple $C_P$ correspondant au couple exercé par les forces de pression sur le secteur résistant.

Comme cela a déjà été indiqué, ces deux couples s'opposent, et sont directement proportionnels à la pression P, et dépendent des caractéristiques géométriques du moule représentées par les valeurs de DS, J, et L. Les couples $C_P$ et $C_F$ sont indépendants de la valeur de l'angle α.

Pour que ces deux couples s'équilibrent approximativement, c'est-à-dire pour que le bombé b au dos des secteurs soit sensiblement égal à zéro, on détermine une valeur de a telle que $a = 0,42 * D_s \left(\dfrac{L}{J}\right)^2$.

Pour transmettre ce couple par l'intermédiaire des saillies 16 et 26 sans déformation excessive des pièces, il convient alors de déterminer les épaisseurs $k_1$ et $k_2$ correspondantes aux épaisseurs minimales au droit des surfaces tronconiques. On aboutit en règle générale à une valeur de $k_1$ proche de la valeur de $k_2$.

Pour réduire ces épaisseurs on aura intérêt à réduire la valeur du bras de levier a pour obtenir un bombé b au niveau du plan équatorial, dont la valeur donne un écartement circonférentiel des secteurs égal à la tolérance maximale correspondant à l'apparition de bavures entre les secteurs. Auquel cas, on prendra une valeur de a correspondant à 0,9 fois, voire 0,8 fois la valeur de a à l'équilibre.

Une autre façon de procéder consiste au contraire à augmenter la valeur de a par rapport à la valeur à l'équilibre de manière à obtenir un bombé « négatif » qui revient en fait à augmenter le frettage circonférentiel des secteurs les uns contre les autres, de manière à compenser l'absence d'anneau de frettage externe disposé au dos des secteurs. Auquel cas, on choisira une valeur de a supérieure à la valeur de a à l'équilibre, soit 1,3, voire 1,4 fois cette valeur. On augmente de fait les valeurs de $k_1$ et $k_2$ sans pénaliser pour autant la masse totale du moule de manière excessive.

Une autre option pour réduire les épaisseurs $k_1$ et $k_2$ consiste à équiper le moule d'un moyen permettant de limiter les efforts exercés sur les parois tronconiques en application l'une contre l'autre sous l'effet des forces de pression.

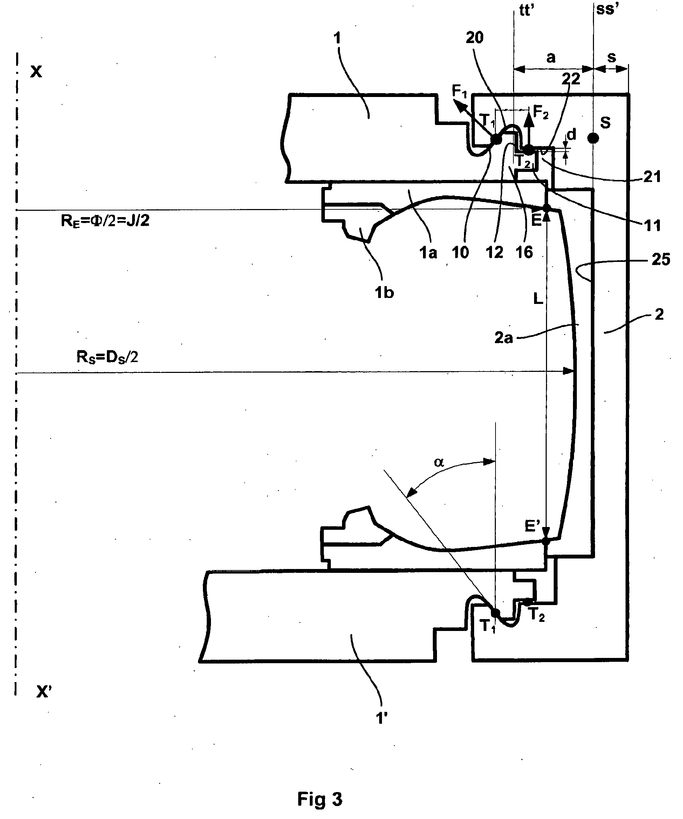

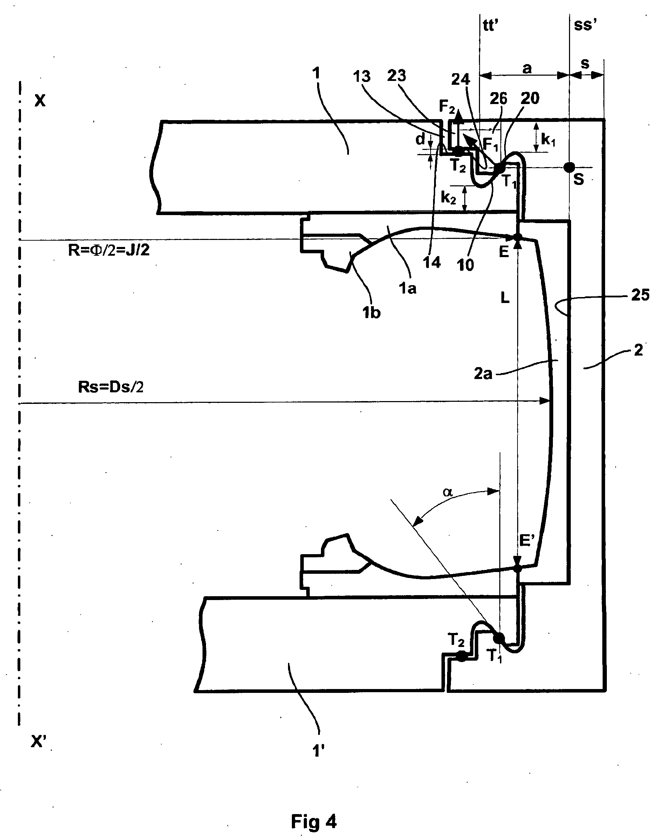

On pourra en conséquence prolonger radialement vers l'extérieur la saillie 16 de la coquille 1 par une butée 11 comme cela est illustré à la figure 3, ou prolonger radialement vers l'intérieur la saillie 26 des secteurs 2 par une butée 23 comme cela est illustré à la figure 4.

La butée 11 collabore avec un logement 21 disposé sur les secteurs 2, et la butée 23 collabore avec un logement 13 disposé sur la coquille 1.

Chaque butée et chaque logement disposent d'une portée respectivement 12 et 22 (figure 3), ou 14 et 24 (figure 4), destinées à entrer en contact l'une de l'autre lorsque la pression dans le moule excède une valeur donnée.

Lorsque la pression augmente, les forces exercées par la coquille ont tendance à faire pénétrer la saillie de la coquille dans la saillie des secteurs, en augmentant comme on l'a déjà vu les forces de serrage.

Cet effort de serrage se traduit, comme on l'a vu également, par une augmentation de la valeur des couples $C_F$ et $C_P$, qui nécessite une augmentation épaisseurs $k_1$ et $k_2$ en raison de l'effet de coin lié à la nature tronconique des surfaces en contact.

Lorsque les portées des butées viennent en contact avec les portées des logements, on limite l'effet de coin, et on partage la transmission des efforts entre les portées des butées et les surfaces tronconiques.

Le jeu entre les portées 12 et 22 ou entre les portées 14 et 24 est défini par la distance d entre les portées au moment de la mise en contact des surfaces tronconiques lors de la fermeture. Ce jeu peut utilement être compris entre 0,05 mm et 1 mm selon la taille du moule.

Il est également possible de calculer le jeu pour que les portées de la butée et du logement entrent en contact lorsque la pression dans le moule atteint une valeur de pression prédéterminée. En pratique, ce jeu est calculé pour que les portées entrent en contact lorsque la pression atteint une valeur préférentiellement comprise entre 50% à 80 %de la pression nominale.

Le point d'application T des forces de fermeture est alors situé radialement entre le point de contact des surfaces tronconiques $T_1$ et le point de contact $T_2$ des portées 12, 24 des butées, respectivement 11 et 23, et des portées 22, 14 des logements respectivement 21 et 13, comme cela est illustré aux figures 3 et 4.

La distance a est mesurée, dans un plan méridien passant par l'axe X', entre la droite tt' parallèle à l'axe XX' du moule et passant par le point T. En pratique cette droite tt' se confond avec la médiatrice des droites parallèles à l'axe XX' du moule et passant respectivement par les points $T_1$ et $T_2$, et la droite ss' parallèle à l'axe XX' et placée dans le prolongement de la partie radialement interne du secteur résistant 2.

Le calcul de la valeur de a à l'équilibre reste le même, et on pourra de la même manière que précédemment, ajuster la valeur du bras de levier au-dessus ou en dessous de cette valeur à l'équilibre pour obtenir les effets déjà décrits.

## Revendications

1. Moule à secteurs pour le moulage et la vulcanisation d'un pneumatique de diamètre donné ($D_S$), ayant une largeur (L) et un diamètre (J) au point d'emboitage (E), comportant des coquilles (1, 1') et des secteurs (2) coopérant pour résister à la pression interne et rester en position de fermeture sans le concours de pièces additionnelles, dans lequel chaque secteur (2) comporte à ses bords latéraux une saillie (26) s'étendant radialement vers l'intérieur, munie d'un rebord s'étendant axialement vers l'intérieur du moule et présentant une surface tronconique inclinée (20) d'un angle donné ($\alpha$) par rapport à l'axe (XX') du moule de telle sorte que les prolongements de la trace de chaque surface tronconique sur un plan méridien se coupent du coté radialement intérieur du secteur considéré, et dans lequel chaque coquille (1, 1') comporte une saillie (16) s'étendant radialement vers l'extérieur et munie d'un rebord présentant une surface tronconique inclinée (10) d'un même angle α par rapport à l'axe XX' du moule **caractérisé en ce que,** en projection dans un plan méridien passant par l'axe XX' du moule, la distance (a) comprise entre une droite (tt') parallèle à l'axe du moule et passant par le point d'application (T) de la résultante des forces (F) de contact entre les coquilles et les secteurs, et une droite (ss') parallèle à l'axe du moule située dans le prolongement de la face interne du secteur résistant est égale à

$$k * 0,42 * D_s \left(\frac{L}{J}\right)^2$$ , avec un coefficient k compris entre 0,8 et 1,4

2. Moule selon la revendication 1 dans lequel le coefficient k est compris entre 1 et 1,4, de sorte que les secteurs subissent un frettage circonférentiel.

3. Moule selon l'une des revendications 1 ou 2, dans lequel l'angle de la surface tronconique (α) des saillies avec la direction axiale (XX') est compris entre 10° et 40° et préférentiellement entre 15° et 35°.

4. Moule selon l'une des revendications 1 à 3 dans lequel le moule comporte des moyens de limitation d'effort composés d'une butée (11, 23) et d'un logement (21, 13) disposés respectivement dans le prolongement radial de chacune des saillies et possédant chacun une portée (12, 22, 14, 24), lesdites portées étant destinées à venir en contact l'une de l'autre lorsque la pression interne dans le moule dépasse un seuil donné.

5. Moule selon la revendication 4, dans lequel la butée (11) et le logement (21) sont disposés du coté radialement externe des saillies de la coquille et des secteurs de sorte que la portée (12) axialement externe de la butée (11) coopère avec la portée (22) axialement externe du logement (21).

6. Moule selon la revendication 4, dans lequel la butée (23) et le logement (13) sont disposés du coté radialement interne des saillies de la coquille et des secteurs de sorte que la portée (24) axialement interne de la butée (13) coopère avec la portée (14) axialement interne du logement (13).

7. Moule selon l'une des revendications 4 à 6, dans lequel le jeu axial (d) entre la portée (12, 24) de la butée et la portée (22, 14) du logement, lorsque les faces (10, 20) de chacune des saillies entrent en contact l'une de l'autre, est compris entre 0, 05 mm et 1mm.

8. Moule selon l'une des revendications 4 à 6, dans lequel le jeu axial (d) entre les portées de la butée (12, 24) et du logement (22, 14) lorsque les faces (10, 20) de chacune des saillies entrent en contact l'une de l'autre est ajusté de sorte que les portées de la butée et du logement entrent en contact lorsque la pression dans le moule représente entre 50% et 80% de la pression nominale.

**Patentansprüche**

1. Segmentierte Form für das Formen und Vulkanisieren eines Reifens mit gegebenem Durchmesser ($D_s$), welche eine Breite (L) und einen Durchmesser (J) am Einpassungspunkt (E) besitzt, aufweisend Schalen (1, 1') und Segmente (2), welche zusammenwirken, um dem Innendruck zu widerstehen und ohne Zuhilfenahme zusätzlicher Teile in geschlossener Position zu bleiben, bei welcher jedes Segment (2) an seinen seitlichen Rändern einen Vorsprung (26) aufweist, welcher sich radial in das Innere erstreckt, mit einem sich axial ins Innere der Form erstreckenden Rand versehen ist und eine kegelstumpfartige Fläche (20) aufweist, welche um einen gegebenen Winkel (α) in Bezug auf die Achse (XX') der Form derartig geneigt ist, dass sich die Verlängerungen der Linie jeder kegelstumpfartigen Fläche in einer Mittelebene auf der radial inneren Seite des betrachteten Segments schneiden, und bei welcher jede Schale (1, 1') einen Vorsprung (16) aufweist, welcher sich radial nach außen erstreckt und welcher mit einem Rand versehen ist, welcher eine kegelstumpfartige Fläche (10) aufweist, die um denselben Winkel α in Bezug auf die Achse XX' der Form geneigt ist, **dadurch gekennzeichnet, dass** bei der Projektion in eine Mittelebene, welche durch die Achse XX' der Form verläuft, der Abstand (a), welcher zwischen einer Geraden (tt'), welche parallel zur Achse der Form und durch den Punkt (T) verläuft, an dem die Resultierende der Kontaktkräfte (F) zwischen den Schalen und den Segmenten angreift, und einer Geraden (ss') liegt, welche parallel zur Achse der Form verläuft und in der Verlängerung der Innenfläche des widerstehenden Segmentes angeordnet ist, gleich $k * 0,42 * D_s \left(\frac{L}{J}\right)^2$ ist, mit einem Koeffizient k, der zwischen 0,8 und 1,4 liegt.

2. Form nach Anspruch 1, bei welcher der Koeffizient k zwischen 1 und 1,4 liegt, so dass die Segmente eine umlaufende Klemmung erfahren.

3. Form nach einem der Ansprüche 1 oder 2, bei welcher der Winkel (α) zwischen der kegelstumpfförmigen Fläche der Vorsprünge und der axialen Richtung (XX') zwischen 10° und 40°, und vorzugsweise zwischen 15° und 35°, liegt.

**4.** Form nach einem der Ansprüche 1 bis 3, bei welcher die Form Mittel zur Begrenzung der Beanspruchung aufweist, welche aus einem Anschlag (11, 23) und einer Aufnahme (21, 13) zusammengesetzt sind, welche jeweils in der radialen Verlängerung jedes Vorsprungs angeordnet sind und jeweils eine Anlagefläche (12, 22, 14, 24) besitzen, wobei die Anlageflächen dafür vorgesehen sind, miteinander in Kontakt zu gelangen, wenn der Innendruck in der Form einen gegebenen Schwellenwert überschreitet.

**5.** Form nach Anspruch 4, bei welcher der Anschlag (11) und die Aufnahme (21) auf der radial äußeren Seite der Vorsprünge der Schale und der Segmente derartig angeordnet sind, dass die axial äußere Anlagefläche (12) des Anschlags (11) mit der axial äußeren Anlagefläche (22) der Aufnahme (21) zusammenwirkt.

**6.** Form nach Anspruch 4, bei welcher der Anschlag (23) und die Aufnahme (13) auf der radial inneren Seite der Vorsprünge der Schale und der Segmente derartig angeordnet sind, dass die axial innere Anlagefläche (24) des Anschlags (13) mit der axial inneren Anlagefläche (14) der Aufnahme (13) zusammenwirkt.

**7.** Form nach einem der Ansprüche 4 bis 6, bei welcher das axiale Spiel (d) zwischen der Anlagefläche (12, 24) des Anschlags und der Anlagefläche (22, 14) der Aufnahme zwischen 0,05 mm und 1 mm liegt, wenn die Flächen (10, 20) jeder der Vorsprünge in Kontakt gelangen.

**8.** Form nach einem der Ansprüche 4 bis 6, bei welcher das axiale Spiel (d) zwischen den Anlageflächen des Anschlags (12, 24) und der Aufnahme (22, 14), wenn die Flächen (10, 20) jeder der Vorsprünge in Kontakt gelangen, derartig eingestellt ist, dass die Anlageflächen des Anschlags und der Aufnahme in Kontakt gelangen, wenn der Druck in der Form einen Wert aufweist, welcher zwischen 50% und 80% des Nominaldrucks liegt.

**Claims**

**1.** Segmented mould for moulding and vulcanizing a tyre of given diameter ($D_S$), having a width (L) and a diameter (J) at the interconnect point (E), comprising shells (1, 1') and segments (2) collaborating to withstand the internal pressure and remain in the closed position without assistance from additional components, in which mould each segment (2) comprises at its lateral edges a projection (26) extending radially inwards, which projection is equipped with a lip extending axially towards the inside of the mould and having an inclined frustoconical surface (20) of given angle ($\alpha$) with respect to the axis (XX') of the mould such that the extensions of the line of each frustoconical surface on a meridian plane intercept on the radially internal side of the segment concerned, and in which mould each shell (1, 1') comprises a projection (16) extending radially outwards and provided with a lip having a frustoconical surface (10) inclined by the same angle $\alpha$ with respect to the axis XX' of the mould, **characterized in that,** in projection onto a meridian plane passing through the axis XX' of the mould, the distance (a) comprised between a straight line (tt') parallel to the axis of the mould and passing through the point (T) of application of the resultant of the forces (F) of contact between the shells and the segments, and a straight line (ss') parallel to the axis of the mould situated in the extension of the internal face of the resistant segment is equal to $k^* 0.42^* D_s \left(\dfrac{L}{J}\right)^2$, with a coefficient k comprised between 0.8 and 1.4.

**2.** Mould according to Claim 1, in which the coefficient k is comprised between 1 and 1.4, so that the segments undergo circumferential bracing.

**3.** Mould according to one of Claims 1 and 2, in which the angle of the frustoconical surface ($\alpha$) of the projections with the axial direction (XX') is comprised between 10° and 40° and preferably between 15° and 35°.

**4.** Mould according to one of Claims 1 to 3, in which the mould comprises force-limiting means made up of a stop (11, 23) and of a housing (21, 13) positioned respectively in the radial extension of each of the projections and each having a bearing surface (12, 22, 14, 24), the said bearing surfaces being intended to come into contact with one another when the internal pressure in the mould exceeds a given threshold.

**5.** Mould according to Claim 4, in which the stop (11) and the housing (21) are positioned on the radially external side of the projections of the shell and of the segments so that the axially external bearing surface (12) of the stop (11) collaborates with the axially external bearing surface (22) of the housing (21).

**6.** Mould according to Claim 4, in which the stop (23) and the housing (13) are positioned on the radially internal side of the projections of the shell and of the segments so that the axially internal bearing surface (24) of the stop (23) collaborates with the axially internal bearing surface (14) of the housing (13).

7. Mould according to one of Claims 4 to 6, in which the axial clearance (d) between the bearing surface (12, 24) of the stop and the bearing surface (22, 14) of the housing, when the faces (10, 20) of each of the projections come into contact with one another, is comprised between 0.05 mm and 1 mm.

8. Mould according to one of Claims 4 to 6, in which the axial clearance (d) between the bearing surfaces of the stop (12, 24) and of the housing (22, 14) when the faces (10, 20) of each of the projections come into contact with one another is tailored so that the bearing surfaces of the stop and of the housing come into contact when the pressure in the mould represents between 50% and 80% of the nominal pressure.

**Fig 1**

Fig 2

**Fig 3**

**Fig 4**

EP 2 785 516 B1

## RÉFÉRENCES CITÉES DANS LA DESCRIPTION

**Documents brevets cités dans la description**

- EP 0436495 A

- EP 1918087 A